# EUROPEAN PATENT APPLICATION

(11) **EP 1 564 973 A1**
(43) Date of publication of application: **17.08.2005**
(21) Application number: 04003262.5
(22) Date of filing: 13.02.2004
(51) Int. Cl.: H04M 1/725, H04M 1/67

(54) **Method and apparatus for position dependent settings**

(71) Applicant: Sony Ericsson Mobile Communications AB, 221 88 Lund (SE)
(72) Inventor: Foxenland, Eral, 254 41 Helsingborg (SE)
(74) Representative: Asketorp, Göran

(57) **Abstract**

A method and apparatus for selecting at least one of a plurality of preset settings, such as security settings, of an electronic apparatus. An preset setting is applied in dependence of the position of the apparatus. If it is determined that the apparatus is moved to a new geographical area, settings associated with that area are automatically applied.

## Description

### Technical Field of the Invention

The present invention relates to a method for selecting different settings of a portable electronic apparatus in dependence of the geographical position thereof. The invention also relates to an apparatus for selecting settings in dependence of its geographical position.

### Description of Related Art

A user has many possibilities to manually tailor settings of a portable electronic apparatus, such as a portable communication apparatus, according to his needs and requirements. Such settings may e.g. comprise security, user interface, incoming calls, signals/alarms, or divert settings. However, the needs and requirements may differ a lot between different users and depending on where the user stays. A user who carries his portable electronic apparatus with him during the day encounters many different environments. Each of the environments may require different settings of the apparatus to meet the user's needs. The needs of security to have sufficient protection for unauthorized or unintentional use may differ a lot depending on whether the user is at the office or at a public place. AT the office, a keylock may suffice whereas a phone lock, a pin code, and a keylock might be desirable at a public place where the risk of theft is greater. Furthermore, the risk of theft may also differ a lot if you are walking around in the forest or in a crowded area or neighborhood. It may also be desirable to have different settings with regard to e.g. incoming calls. AT the office, it might be desired to divert all incoming calls to the switched telephone network. At home, it might be desired to only allow certain incoming calls.

There is a problem with portable electronic apparatuses known in the art, in that in order to select a different setting, the user has to manually enter one or several menus to chose and set the setting. If the user stays at many different places during the day, this procedure tend to get very cumbersome. Therefore, to have maximum protection of the apparatus, the highest security level tend to be applied at all times, as the risk to forget to switch to a higher security level is considerable. This has the disadvantage that an unnecessary security level is sometimes applied, which makes the apparatus more cumbersome to use than necessary.

### Summary of the Invention

It is an object of the invention to provide a method and an electronic apparatus for making selectable settings of a portable electronic apparatus easier to select. More specifically, it is an object of the invention to provide a method and an apparatus for dynamically selecting preset settings without involvement of a user.

The object of the invention is achieved by a method for selecting at least one of a plurality of preset settings of an electronic apparatus according to the invention. The geographical position of the apparatus is determined. At least one preset setting of the apparatus is selected, which is/are associated with a certain geographical area, in dependence of the determined positioned.

The method may comprise associating a geographical area with at least one preset setting. Furthermore, the step of determining the position of the apparatus may comprise determining a current geographical area, in which the apparatus currently is situated. Also, it may be determined whether the current geographical area is different from a previously determined geographical area. If the current and the previously determined geographical areas correspond, a preset setting currently applied in the electronic apparatus is maintained. If the current and the previously determined geographical areas do not correspond a new preset setting is selected to be applied in the electronic apparatus. The new preset setting is associated with the current geographical area.

At least one preset setting may be received from a communication network. The communication network may be a wireless telecommunication network, or a wireless local area network. Furthermore, geographical area information may be received and stored. Thus, the received geographical area information may be associated with at least one preset setting. The received geographical area information may also be associated with at least one preset setting when received by the apparatus.

The preset setting may comprise at least one of a security, a profile, a theme, a keylock, a user interface, a spamming filter, a proximity, or a position reporting setting. The security setting may comprise at least one setting of a function for preventing unauthorized or unintentional use of the apparatus. The function for preventing unauthorized use may be a phone lock code or a PIN code.

The object of the invention is also achieved by an electronic apparatus according to the invention. The apparatus comprises selecting means for selecting at least one of a plurality of preset settings of the apparatus, and position determination means for determining the geographical position of the apparatus. Each preset setting is associated with a certain geographical area. The selecting means is arranged to select the preset setting in dependence of the position of the apparatus.

The apparatus may comprise means for associating a geographical area with at least one preset setting.

The position determination means may be adapted to in operation determine whether a current geographical area is different from a previously determined geographical area. The selecting means may be adapted to in operation maintain a preset setting currently applied in the electronic apparatus if the current and the previously determined geographical areas correspond. The selecting means is also adapted to select a new preset setting, which is associated with the current geographical area, to be applied in the electronic apparatus if the current and the previously determined geographical areas do not correspond.

The apparatus may also comprise a communication unit, which is adapted to receive preset settings from a remote apparatus or network. The network may be a wireless telecommunication network or a wireless local area network. The communication unit may also be adapted to receive and store geographical area information in a memory. The selecting means may be adapted to associate the received geographical area information with at least one preset setting. Alternatively, the received geographical area information may be associated with at least one preset setting when received.

The preset setting may comprise at least one of a security, a theme, a profile, a user interface, a spamming filter, a proximity, or a position reporting setting. The security setting may comprise a setting of a function or code for preventing unauthorized or unintentional use of the apparatus (1). The function or code for preventing unauthorized or unintentional use may comprise a phone lock code, a PIN code, or a keylock code.

The apparatus may be portable or mounted into a moveable device. E.g. the apparatus may be a mobile radio terminal, a pager, a personal digital assistant (PDA), a communicator, a smartphone, an electronic organizer, or a mobile telephone.

The object of the invention is also achieved by a computer program product embodied on a computer readable medium, comprising computer readable instructions for carrying out the method according to the invention when carried out by a processor.

Further embodiments of the invention are defined in the dependent claims.

There is an advantage of the invention that preset settings of a portable electronic apparatus may be automatically selected more dynamically. As only the desired settings are applied wherever the user is located maximum usability is obtained at each location. Thus, the user may more easily initiate the task he wants to perform as the apparatus at each instance better suits his needs. By utilizing the invention, unnecessary manual interactions to personalize the apparatus to each environment is avoided, which also saves battery power.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features, and advantages of the invention will appear from the following description of several embodiments of the invention, wherein various aspects of the invention will be described in more detail with reference to the accompanying drawings, in which:
Fig. 1 is a schematic view of a mobile terminal connected to a telecommunication network, a wireless local network, a computer and a position determination system;
Fig. 2 is a block diagram of the mobile terminal of Fig. 1;
Fig. 3 is a map illustration geographical areas;
Fig. 4 is a flow-chart of one embodiment of the method according to the invention; and
Fig. 5 is a flowchart of a method for associating area information with setting information.

### Detailed Description of Embodiments

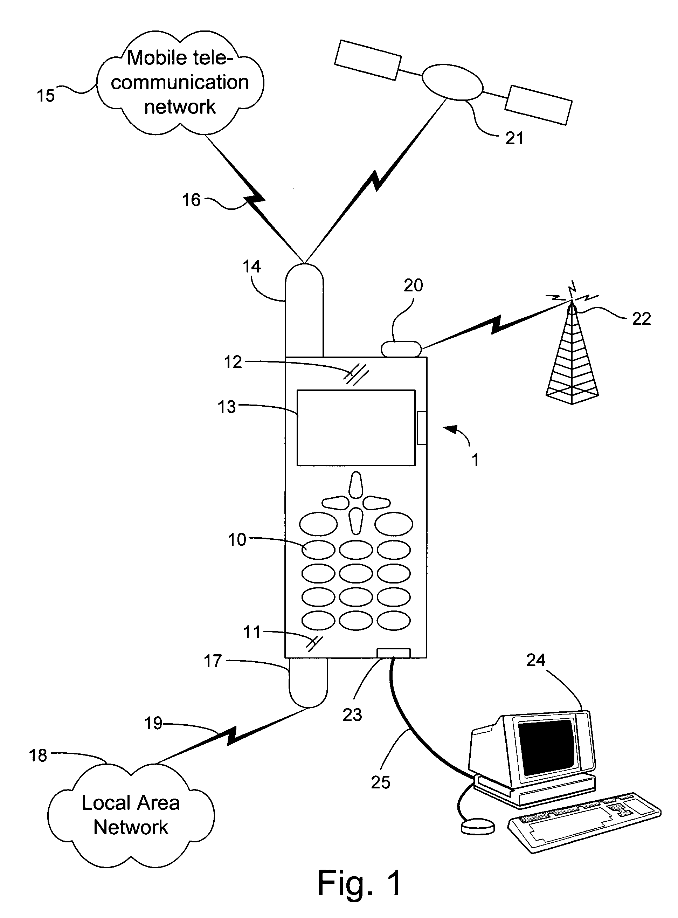

Fig. 1 illustrates an electronic apparatus embodied as a mobile terminal 1 or mobile telephone. The invention is not limited to a mobile terminal 1, but can be incorporated into any portable electronic device comprising preset settings, such as security settings, which may be interchanged. A portable electronic device according to the invention comprises, but is not limited to, a mobile radio terminal, a mobile telephone, a pager, a personal digital assistant (PDA), and a communicator, i.e. a smartphone or an electronic organizer. For convenience, reference to a mobile terminal 1 will be made throughout this description.

The electronic apparatus according to the invention is not limited to portable communication devices, but can be incorporated into semi-portable or semi-stationary devices. Such semi-stationary devices comprises electronic equipment mounted into a moveably device, such as electronic equipment mounted into a vehicle. An electronic navigation system comprising preset settings may select different settings depending on the position of the car, although the navigation system in fact is stationary within the car.

The present invention provides functionality wherein at least one of a plurality of preset settings is automatically selected in dependence of the position of the mobile terminal 1. A preset setting within the meaning of this application is a setting which tailors a specific function or unit of the apparatus according to the user's desire. Each unit or function may comprise many different preset settings, which may be chosen by the user.

The mobile terminal comprises a man-machine or user interface (UI) comprising, but not limited to, a keypad 10, a microphone 11, a loudspeaker 12 and a display 13. The user interface may be used for operating and interacting with the mobile terminal, such as associating a certain setting with a certain geographical area, as will be explained below.

The mobile terminal 1 also comprises various communication means for communicating with other electronic equipment. A first antenna 14 is adapted for communication with e.g. a mobile telecommunication network 15 over a first wireless link 16. The telecommunication network 15 may e.g. be a GSM (General System for Mobile communication), a UMTS (Universal Mobile Telecommunications System), a PDC (Personal Digital Cellular system), a IS-136, a IS-95, a IMT-2000 (International Mobile Telecommunications 2000) or any other communication network utilizing any of the frequency division, time division or code division techniques.

A second antenna 17 is adapted for short-range supplementary communication with a local area network 18 or a peripheral electronic device over a second wireless link 19. The second wireless link may e.g. be Bluetooth® link.

A third antenna or reception means 20 is adapted to receive position and time data from several satellites 21 (only one is shown) or pseudolites 22 (only one is shown). With pseudolite is meant a position data transmitting means, which is located on the ground and which transmits data similar to position and time data transmitted from a satellite 21. The mobile terminal is adapted to determine the geographical position of the mobile terminal 1 on the surface of the earth. To determine the position, data from several satellites 21 or pseudolites 22 have to be received. The position and time data received from several pseudolites 22 may be used similar to position and time data received from the satellites 21 to determine the geographical position of the mobile terminal 1. The pseudolites 22 may e.g. form a local network for position determination in places wherein signals from the satellites 21 may not reach the mobile terminal 1.

An accessory connector 23 is provided for connecting the mobile terminal 1 to various peripheral devices. A computer 24 having input means, such as a keyboard and a mouse, may be connected to the accessory connector 23 by means of a cable 25, such as a serial cable. Alternatively, the computer 24 is connected to the mobile terminal 1 by means of a wireless link, such as the second link 19. The mobile terminal may be connected to a global information network, such as the Internet, e.g. through the computer 24 or the mobile telecommunication network 15.

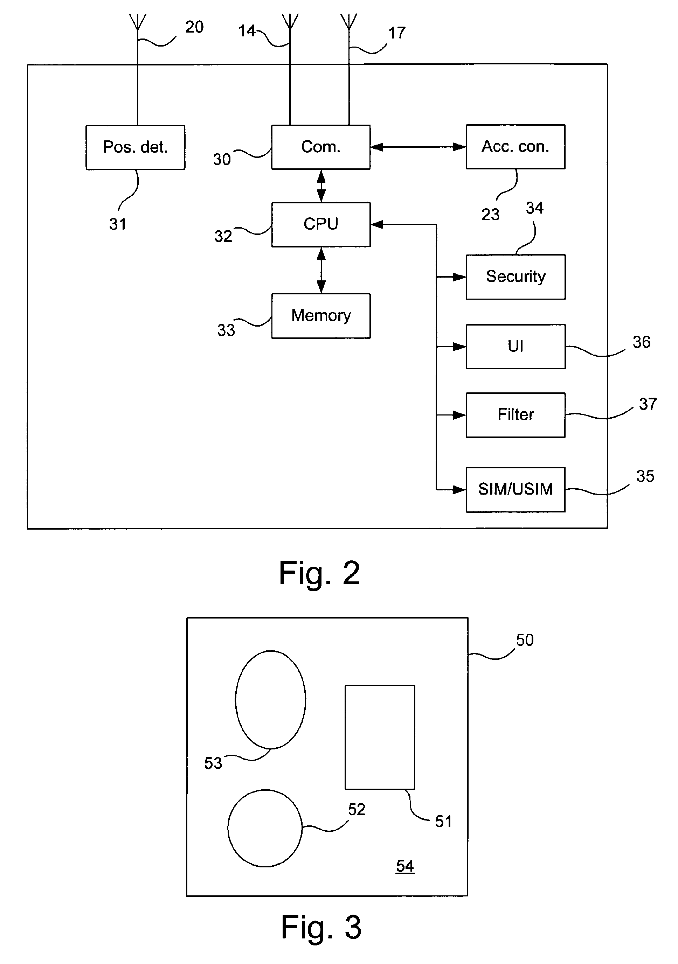

Fig. 2 illustrates components of the mobile terminal according to the invention. The first and second antennas 14, 17 are connected to a communication unit 30. The communication unit 30 provides wireless communication capabilities for communicating with the telecommunication network 15 and the local area network 18 according to any of the above mentioned technologies. To provide the communication capabilities, the communication unit 30 comprises e.g. a receiver/transmitter, a modulator/demodulator, a coder/decoder, analog-to-digital (A/D) converters, amplifiers, and a digital signal processor.

A position determination unit 31 is connected to the third antenna 20. The position determination unit 31 is adapted to determine the geographical position of the mobile terminal 1 on the earth based on received position data. One such system for determining the geographical position comprises a GPS (Global Positioning System) receiver, which may receive positioning and timing data from satellites 21 orbiting the earth or from pseudolites positioned on the surface of the earth. Based on the received position and timing data, the position determination unit 31 will generate a very exact geographical position of the mobile terminal 1.

Another position determination system is a network based positioning system, which may be collocated or consolidated with the base stations of the mobile telecommunication equipment. The network based positioning system determines the geographical position of the mobile terminal 1 e.g. based on received signal measurements. The measurements may comprise angle of arrival, time difference and signal strength of received signals. Once the geographical position of the mobile terminal is determined, it may be reported back to the terminal.

It is also possible to determine the position of the mobile terminal 1 in a GSM telecommunication system. The mobile terminal 1 receives timing data from three different base transceiver stations. Based on the arrival time of the data received from the base transceiver stations, the geographical position of the mobile terminal 1 may be determined. One such system is the E-OTD (Enhanced Observed Time Difference).

A hybrid approach is that the mobile terminal 1 collects measurement data from its environment that are reported back to the network which in turn uses the data to determine the geographical position of the mobile terminal 1, which may be reported back.

The position determination unit 31 is connected to a controller or central processing unit (CPU) 32, which comprises a selecting means, which is adapted to select at least one of a plurality of preset settings in dependence of the geographical position of the mobile terminal 1.

The controller 32 is connected to a memory, such as a random access memory 33, in which geographical area data and associated preset settings are stored. The controller 32 is adapted to repeatedly determine the specific geographical area in which the mobile terminal 1 is currently located. The determination is made with a predetermined time interval, such as every 10^{th} second or every 5^{th} minute. The time interval may be default or user defined as desired. Alternatively, the time interval is adaptively set depending on the speed of the mobile terminal 1, which may be determined by the position determination unit 31. The controller 32 may form part of the position determination unit 31. Alternatively, the position determination unit comprises a separate processor for determining the geographical area in which the mobile terminal 1 is currently located.

The preset security settings are illustrated collectively as a security unit 34 adapted to provide preset security settings of the mobile terminal 1. The security settings of the mobile terminal 1 are provided to prevent unauthorized or unintentional use. A first preset setting may comprise on/off of a keylock of the keypad 10. Thus, unintentional use may be prevented when a user carries the mobile terminal e.g. in a pocket. To unlock the key lock a certain code has to be inputted, which may comprise to specific keys of the keypad 10. A second preset setting of the security unit 34 may comprise on/off of a phone lock. If the phone lock setting is set to on, a code may have to be entered by means of the keypad when the mobile terminal 1 is switched on after having been switched off. A third preset setting of the security unit 34 relates to the requirement of entering a PIN (Personal Identification Number) code relating to a SIM/USIM (Subscriber Identification Module/UMTS SIM) card provided in a SIM/USIM card slot 35. If the setting relating to the SIM/USIM card is on, the PIN code has to be entered by means of the keypad 10 to get subscriber access to e.g. mobile communication provider. Other security settings, such as finger print recognition or eye recognition, may also be provided, which will prevent unauthorized or unintentional use. The security unit 34 may comprises a predetermined number of security levels, which each comprises one or several security functions. A first level may require a keylock code, a second level a keylock and a phone lock code, and a third level may comprise a keylock, a phone lock, and PIN code.

Another security setting is that the mobile terminal 1 may be set to reveal its position to a network administrator within a predetermined time interval. In an emergency vehicle the staff may not have time to report back to the home base. Then, the mobile terminal may be set to automatically report back its position once it is outside the area of the home base.

A proximity function may indicate whether the mobile terminal is in the proximity of another mobile terminal if the network operator has knowledge of where mobile terminals are currently located. If the setting of the proximity function is on, an notification may alert the user of the mobile telephone that he is in the proximity if another user. The network operator issues the notification if the user of the mobile terminal 1 and the other user is in the same area, which may be predetermined by any of the users.

The preset settings of the user interface (UI) are shown collectively as a UI unit 36 in Fig. 2. The UI unit 36 comprises different preset settings of the user interface. Different themes or profiles, i.e. a common setting for applying one or several preset settings, such as settings of graphical information displayed on the display 13, sound, signals/alarms, vibrator signal, allowed callers, divert calls, answering mode, display light, voice command, and language settings. Each of the UI settings may be independently selected with regard to other preset settings.

The preset settings of a spamming filter are shown collectively as a filter unit 37, which may comprise settings of the filter. The spamming filter may be provided for filtering e.g. incoming messages such as an SMS (Short Message Service) or an MMS (Multimedia Message Service) message. If the message filter is on, incoming messages from an unauthorized or unapproved source may be automatically deleted without notifying the user of the mobile terminal that a message is received. An approved message may e.g. be a message received from any entity listed in e.g. a contact list, such as a phone book, within the mobile terminal 1. The received message may also have an attached notification that the message is a push message. If the spamming filter is on and such as message is received it will be automatically deleted without notifying the user.

According to the present invention, one or several preset settings are dependent on the geographical position of the mobile terminal 1. A specific setting or group of settings may be selected and applied within a certain geographical area. Once the mobile terminal 1 is moved from a first area, associated with a first set of preset settings, to a second area associated with a second set of preset settings different from the first set, said second set of settings is selected. Each set comprises one or several preset settings.

Fig. 3 illustrates a map 50 having a first, second and third specified geographical area 51, 52, and 53, and an fourth unspecified geographical area 54. The first area 51 is associated with a first set of preset settings, the second area 52 is associated with a second set of preset settings, the third area 53 is associated with a third set of preset settings, and the fourth area 4 is associated with a fourth set of preset settings. The preset settings associated with each geographical area may be similar. The geographical areas may e.g. be defined by the geographical co-ordinates of the outer boundaries thereof. The co-ordinates may e.g. be provided with a certain distance, wherein each area comprises an array of discrete co-ordinate values stored in e.g. the memory 33. Once the geographical position of the mobile terminal is determined, the controller 32, or an internal processing unit of the position determination unit 31, may determine whether the current geographical position of the mobile terminal 1 is within the boundaries of any of the specified areas 51, 52 53. If not, the mobile terminal 1 is determined being within the unspecified area 54.

The map 50 illustrates as city, such as the home town of the user. The first area 51 may comprise the home of the user. The second area 52 may comprise the office wherein the user works. The third area 53 may define a shopping mall. The fourth area is an undefined area wherein the mobile terminal 1 only is located occasionally. In each of the specified areas 51, 52, 53 the user may have different requirements of the mobile terminal 1. In the shopping mall the security requirements may be higher than in the office and in the home as the probability of a theft is higher. In the home, allowed callers may be on to restrict incoming calls from business contacts. In the office divert may be on to automatically divert all incoming calls to the switched telephone network. The preset settings associated with each area 51, 52, 53, 54 may e.g. be the following:

| | Area 1 | Area 2 | Area 3 | Area 4 |
|---|---|---|---|---|
| Divert | Off | Off | On | Off |
| Phone lock | Off | On | Off | Off |
| Pin code | Off | On | Off | On |
| Filter | Off | On | Off | Off |
| Allowed callers | On | Off | Off | Off |

The above settings are only exemplary and may either be provided as default settings or user defined settings. Furthermore each area 51, 52, 53, 54 may be associated with a certain profile or theme, wherein one or several of the above mentioned settings are selected and applied when the mobile terminal is entering a certain area.

The above table may e.g. be stored in the memory 33. When it is determined that the mobile terminal 1 has entered a new area 51, 52, 53, 54, the settings of the new area are retrieved from the memory and automatically selected to be applied as appropriate.

The settings of the above table may be selected as a set of settings wherein all preset settings are read and applied if the mobile terminal 1 has entered a new area 51, 52, 53, 54. In the above table, divert is preset to off in both area 1 (set 1) and in area 2 (set 2). Thus the new setting of divert will be the same as the previous. If the preset settings relate to on or off, the settings may be represented as a logical 0 or 1. Thus, the set of settings may be read as an array of logical representation of on and off.

The preset settings may also be more complicated than what can be represented by a local 0 or 1. In a specific setting of a theme, the background color may be green, the alarm signal relate to "melody 1", and the alarm relate to "melody 2". In such a case the preset settings may be implemented with software readable code portions, which may be implemented by the controller 32.

It is also possible to determine whether a certain setting currently applied for a first area, would be the same when the mobile terminal is entering a new second area. When it is determined that a specific preset setting that is different in the first and the second area, the setting of that area is selected to be applied as a new setting.

A service provider may provide area co-ordinate data. The co-ordinate data may be downloaded from a communication network, such as a mobile communication network. The user may e.g. download area co-ordinate data with regard to all shopping malls within a specific city. Alternatively, such co-ordinate data is automatically downloaded when the mobile terminal 1 enters a new city or area.

A software tool run on the computer 24 for creating the geographical areas 51, 52, 53, 54 may also be provided. The software tool may e.g. provide maps over different countries and cities all over the world. Certain geographical areas within the maps may be defined by drawing a boundary around an area, e.g. by means of the mouse. Once the boundary is provided, the software tool will automatically generate the geographical co-ordinates of the area specified by the boundary. When the area 51, 52, 53 is generated it may be transferred to the mobile terminal 1. Any geographical position falling outside a specified area 51, 52, 53 may be specified as belonging to the unspecified area. Thus, in the above example when the current position is found to be outside the first, second and third specified areas 51, 52, 53, the mobile terminal is considered being in the unspecified area 54.

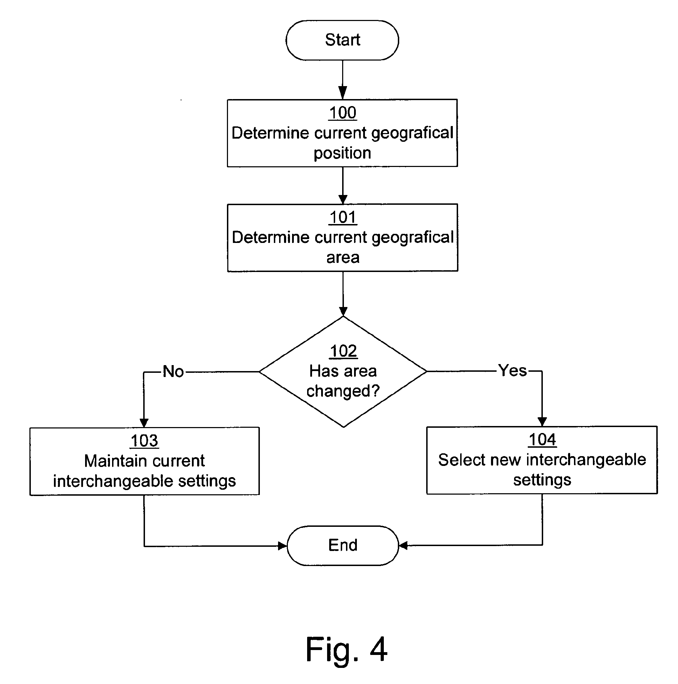

Fig. 4 illustrates an embodiment of the method according to the invention. In a first step 100 the current geographical position of the mobile terminal 1 is determined. Then, in step 101 the geographical area in which the mobile terminal currently is located is determined. This may e.g. be determined by deciding whether the current position is within the boundary of any of the specified geographical areas 51, 52, 53. If the current position is not within any of the specified areas, mobile terminal is considered being in the unspecified area 54.

In step 102 it is determined whether area in which the mobile terminal currently is located has changed, i.e. whether the current area is different from the area determined in the previous area determination procedure. If the answer in step 102 is no, the currently selected preset settings, and applied as settings of the mobile terminal 1, are maintained in step 103. If the answer in step 102 is yes, the new preset settings associated with the current area, in which the mobile terminal 1 is currently located, are selected in step 104, wherein the procedure is ended.

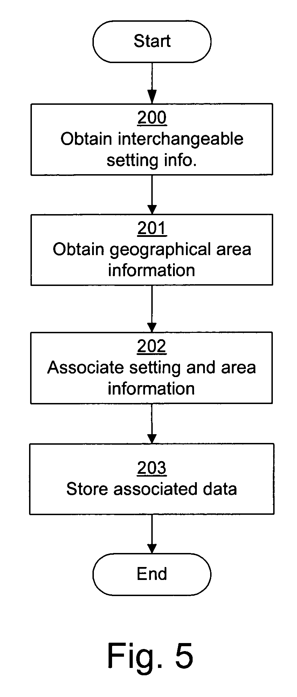

Fig. 5 illustrates a method for associating area information and preset setting information. This method may be provided as an integral part of the method of Fig. 4, such as prior to step 100. In step 200 preset settings are obtained. The settings may e.g. be automatically received from a communication network or manually set by the user. In a step 201 geographical area information, i.e. co-ordinate data of the boundaries of the areas, is obtained. The area information may e.g. be received from the telecommunication network 15, the local area network 18 or the computer 24. In step 202 the obtained area information is associated with one or several preset settings. The association may be made by utilizing the UI 36 or by the software tool for providing the areas 51, 52, 53, 54 to create a table according to above. Alternatively, the geographical area information and the preset settings may be associated when received. When the area information and setting information are associated, the associated data is stored in the memory 33 in step 203.

The preset settings are for illustrating purposes described as belonging to a unit 34, 36, 37. Each unit may implemented as software implemented instructions which are carried out by the controller 32 to select the settings in dependence of the determined position.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The invention is only limited by the appended patent claims.

## Claims

1. A method for selecting at least one of a plurality of preset settings of an electronic apparatus (1), **characterized by** the steps of:
determining the geographical position of the apparatus (1); and
selecting at least one preset setting, which is/are associated with a certain geographical area (51, 52, 53, 54), of the apparatus (1) in dependence of the determined positioned.

2. The method according to claim 1, further comprising the step of associating a geographical area (51, 52, 53, 54) with at least one preset setting.

3. The method according to claim 1 or 2, wherein the step of determining the position of the apparatus (1) further comprises the step of determining a current geographical area (51, 52, 53, 54) in which the apparatus currently is situated.

4. The method according to claim 3, further comprising the steps of:
determining whether the current geographical area (51, 52, 53, 54) is different from a previously determined geographical area (51, 52, 53, 54);
maintaining a preset setting currently applied in the electronic apparatus if the current and the previously determined geographical areas correspond; and
selecting a new preset setting, which is associated with the current geographical area, to be applied in the electronic apparatus if the current and the previously determined geographical areas do not correspond.

5. The method according to any of the previous claims, further comprising the step of receiving at least one preset setting from a communication network (15, 18).

6. The method according to claim 5, wherein the communication network is a wireless telecommunication network (15), or a wireless local area network (18).

7. The method according to any of the previous claims, further comprising the steps of receiving and storing geographical area information.

8. The method according to claim 7, further comprising the step of associating the received geographical area information with at least one preset setting.

9. The method according to claim 7, wherein the received geographical area information is associated with at least one preset setting when received.

10. The method according to any of the previous claims, wherein the preset setting comprises at least one of a security, a profile, a theme, a keylock, a user interface, a spamming filter, a proximity, or a position reporting setting.

11. The method according to claim 10, wherein the security setting comprises at least one setting of a function for preventing unauthorized or unintentional use of the apparatus (1).

12. The method according to claim 11, wherein the function for preventing unauthorized use is a phone lock code or a PIN code.

13. An electronic apparatus (1) comprising selecting means (32) for selecting at least one of a plurality of preset settings of the apparatus, **characterized by**
position determination means (31) for determining the geographical position of the apparatus (1); and
wherein each preset setting is associated with a certain geographical area (51, 52, 53, 54), and the selecting means (32) is arranged to select the preset setting in dependence of the position of the apparatus.

14. The apparatus according to claim 1, wherein the apparatus comprises means for associating a geographical area with at least one preset setting.

15. The apparatus according to claim 1 or 2, wherein the position determination means (31) is adapted to in operation determine whether a current geographical area (51, 52, 53, 54) is different from a previously determined geographical area (51, 52, 53, 54), the selecting means is adapted to in operation maintain a preset setting currently applied in the electronic apparatus (1) if the current and the previously determined geographical areas correspond, and to select a new preset setting, which is associated with the current geographical area, to be applied in the electronic apparatus (1) if the current and the previously determined geographical areas do not correspond.

16. The apparatus according to any of the claims 13-15, further comprising a communication unit (30), which is adapted to receive preset settings from a remote apparatus (24) or network (15, 18).

17. The apparatus according to claim 16, wherein the network is a wireless telecommunication network (15) or a wireless local area network (18).

18. The apparatus according to claim 16, wherein the communication unit (30) is further adapted to receive and store geographical area information in a memory (33).

19. The apparatus according to claim 18, wherein the selecting means (32) is further adapted to associate the received geographical area information with at least one preset setting.

20. The apparatus according to claim 18, wherein the received geographical area information is associated with at least one preset setting when received.

21. The apparatus according to any of the claims 13 to 20, wherein the preset setting comprises at least one of a security, a theme, a profile, a user interface, a spamming filter, a proximity, or a position reporting setting.

22. The apparatus according to claim 21, wherein the security setting comprises a setting of a function or code for preventing unauthorized or unintentional use of the apparatus (1).

23. The apparatus according to claim 22, wherein the function or code for preventing unauthorized or unintentional use comprises a phone lock code, a PIN code, or a keylock code.

24. The apparatus according to any of the claims 13-23, wherein the apparatus is portable or mounted into a moveable device.

25. The apparatus according to any of the claims 13-23, wherein the apparatus is a mobile radio terminal, a pager, a personal digital assistant (PDA), a communicator, a smartphone or an electronic organizer.

26. The apparatus according to any of the claims 13-23, wherein the apparatus is a mobile telephone (1).

27. A computer program product embodied on a computer readable medium, comprising computer readable instructions for carrying out the method according to any of the claims 1-12 when carried out by a processor (32).
